# EUROPEAN PATENT SPECIFICATION

(11) **EP 1 568 240 B1**
(45) Date of publication and mention of the grant of the patent: **08.08.2007**
(21) Application number: 03775515.4
(22) Date of filing: 10.11.2003
(51) Int. Cl.: H04Q 7/22

(54) **TELECOMMUNICATIONS SERVICES APPARATUS AND METHODS**
VORRICHTUNG UND VERFHAREN FÜR TELEKOMMUNIKATIONSDIENSTE
APPAREIL ET PROCEDES POUR SERVICES DE TELECOMMUNICATIONS

(30) Priority: 11.11.2002 GB 0226238; 14.11.2002 GB 0226572
(43) Date of publication of application: 31.08.2005
(73) Proprietor: INTELLPROP LIMITED, Guernsey, Channel Islands (GB)
(72) Inventor: WILSON, Jeffrey, Fareham, Hampshire PO1 7OH (GB)
(74) Representative: Pilch, Adam John Michael
(86) International application number: PCT/GB2003/004859
(87) International publication number: WO 2004/045231

(56) References cited:
- EP-A- 1 246 478
- WO-A-98/32300
- WO-A-99/12364
- US-A1- 2002 045 442
- US-A1- 2002 112 014

## Description

This invention relates to telecommunications services apparatus and methods, such as in the field of mobile telephone networks and messaging services.

Messaging on mobile networks, and in particular text messaging, has grown significantly since its introduction. It is foreseen that in the future, advanced services will continue to fuel this growth as users find that the mobile terminal becomes increasingly useful for a variety of aspects of communication and information retrieval.

Currently, the predominant usage of messaging services on mobile networks is for person to person text messaging, which in the case of GSM networks is supported by the Short Message Service (SMS.) Comparable messaging technologies exist for other mobile network architectures, and next generation messaging systems for GSM (Enhanced Messaging Services EMS, and Multimedia Messaging Services MMS) are being introduced; collectively these are hereon referred to as text messaging services.

Some value-added text messaging services may require a user to send a text message to a specified number or short code, causing the network to process the message according to the service specified by the number. This might be for example to process the message in some way, possibly transforming certain aspects of its addressing or content, before onward delivering it to its destination. Alternatively for some applications the network may direct the transformed message back to the originating user. This latter case is dealt with in co-pending International application No. PCT/GB20031003638.

Other uses of text messaging services include person to Host, and Host to person, where a Host is a network equipment or third party equipment designed to source and/or sink text messages. Hosts typically provide message collection facilities for voting events, competitions or information services and/or message source facilities for subscription services or advertising.

It is common for SMS Hosts to have the capability to specify an alphanumeric CLI for host-originated traffic, such that when messages are delivered to the handsets of recipients, the message is displayed as originating from a name rather than just a normal numeric MSISDN CLI. This feature is commonly used for advertising, promotional or network-related messaging such as voice-mail alerts.

It is not possible in current GSM networks for users to be able to specify an alphanumeric CLI when originating messages from their handsets; this feature is restricted to Hosts. One of the reasons for this is that the mobile originated path between handset and SMSC in GSM is not specified to be able to carry an alphanumeric CLI, whereas the mobile terminated paths from Host to SMSC and SMSC to destination handset use a different message format that does support alphanumeric CLI.

The present invention addresses the problem that users cannot currently specify alphanumeric CLIs on messages that they originate from their mobile handsets. The ability to present an originating name that can be selected spontaneously and used to convey emotion, humour, fun etc. adds a new dimension to the already enormously popular text messaging service. The invention opens up this possibility to all of the huge installed base of existing text-message capable handsets that are in service.

WO 99/12364 relates to the conversion of messages between text message and e-mail format. A text message is generated containing the originating mobile's own number and an assigned name. The destination is an SMSC. The message arrives at the SMSC in the same form that it was transmitted.

EP 1 246 478 A1 relates to providing SMS identification codes. In one embodiment, the identification code can be added to the sender identification of the SMS message. In a further embodiment, the sender's telephone number together with an identification code is entered in the body of the text message. The source address indicates that of the server which processed the text message and the identification code remains embodied in the message.

According to one aspect of the present invention there is provided telecommunications services apparatus as claimed in claim 1.

According to another aspect of the present invention there is provided a method of processing text messages, as claimed in claim 19.

Further aspects of the invention provide a computer program for carrying out the above method, and a storage medium on which such computer program is stored.

In this context, characteristics of the text message include but are not limited to addressing, content and user configurable settings. The message forwarded to the recipient could have its source address modified to be an address representative of the sender. The message may be originated by a user within the home network or by a user that is roaming, as the equipment may be so placed in the home network so as to intercept all mobile originated messaging traffic from subscribers of the network whether they be roaming or not.

In order that the invention may be more readily understood, embodiments thereof will now be described, by way of example, with reference to the accompanying drawings, in which:
Figure 1 is a block diagram of apparatus according to one embodiment of the invention;
Figure 2 is a block diagram of another embodiment of the invention;
Figure 3 is a block diagram of a further embodiment of the invention; and
Figures 4 and 5 show how a complete received message looks in a preferred embodiment of the invention. Figure 4 shows an initial alert screen and Figure 5 shows the screen upon opening the message.

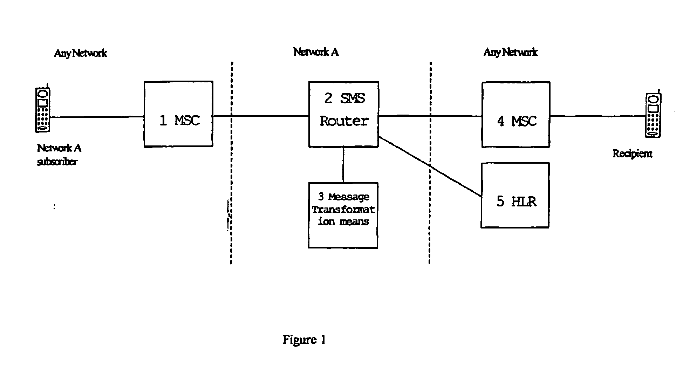

Referring to Figure 1, a Network A subscriber terminal (on any network) communicates via a mobile switching centre (MSC) 1 with an SMS Router 2 in Network A. The SMS Router 2 communicates with a message transformation means 3 in Network A, and with a home location register (HLR) 5 in any network. The SMS Router 2 also communicates via an MSC 4 in any network, to a recipient terminal.

The SMS Router 2 may, for example, be a Telsis (RTM) SMS Router, manufactured by Telsis Limited. This equipment is capable of connection to mobile telephone networks using known and standardised signalling protocols including SS7 and TCP/IP.

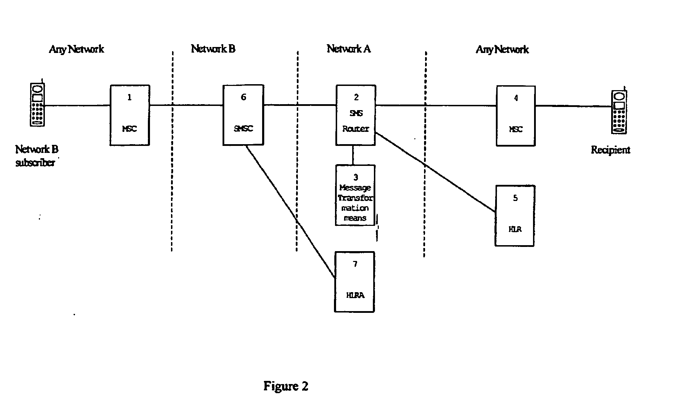

Figure 2 is similar to Figure 1, except that the caller is a Network B subscriber and so the call is transferred via an SMSC 6 in Network B which communicates with an HLR 7 (HLRA) in Network A.

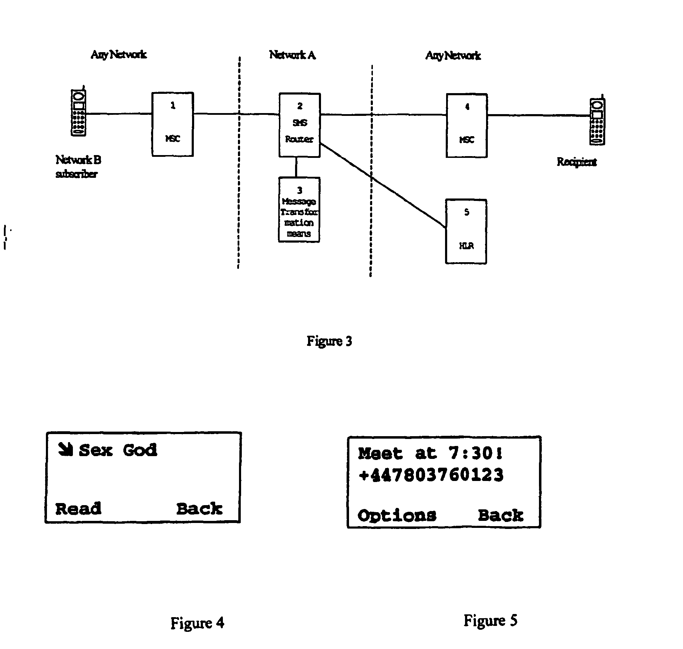

Figure 3 is similar to Figure I, except that the caller is a Network B subscriber, communication with the system being affected as described below.

Preferably the implementation of the apparatus can identify a category of text message while the message is still in Mobile Originated (MO) form. i.e. as it enters the network and before it arrives at a Short Message Service Centre (SMSC.) For GSM this architecture is readily achievable by means of SMS Routers, which are normally placed in a network so as to carry and selectively route all MO text traffic. The SMS Routers can implement the function of identifying a category of text messages and can route these messages selectively to an associated subsystem, which may be either external or internal to the SMS Routers, that can provide the desired transformation of the text message. Having been transformed, the message is then direct delivered to the recipient in (MT) mobile terminated form, without passing through as SMSC. In the event of direct delivery failure the SMSC Router may-
- Retry
- Pass the message to an SMSC over an interface that supports alpha CLI, such as SMPP
- Pass the message to an SMSC adapted to accept MT messages over SS7 for onward delivery, whereas SMSCs normally only accept MO messages for onward delivery
- Pass the message to an SMSC over SS7 for onward delivery, but without an alphanumeric CU

In an embodiment of the invention, the sender formulates the body of the text message using a syntax that identifies a destination MSISDN number, the desired alphanumeric CLI and the message itself. For example, using '.' as a separator, a message might be formulated according to the following specification:
<destination number>.<alpha name>. <message>

An example message sent from phone number +44 7803 760123 according to this specification could be:
07890123456.SexGod.Meet at 7:30!

In a preferred embodiment, this message is then sent to a common shortcode or long service number, which enables the network to easily identify the message as one requiring a certain transformation process.

The message will then be delivered to the entered MSISDN 07890123456 but will arrive and be displayed as being sent from 'SexGod' without any such entry ever having been entered in the recipient's phone book.

Although anonymous services are also possible using these techniques, a preferred embodiment also adds the sender's real MSISDN on the end of the message.

The complete received message in a preferred embodiment looks like Figures 4 and 5. Figure 4 shows the initial screen alert. Figure 5 shows it upon opening the message.

It is important to note that the message length, which is limited to 160 characters in GSM, is not increased by the described transformation. This is because the destination phone number (which may be in national or international format) in the original message plus the two characters are all stripped from the message during the transformation process, and are replaced by the sender's real MSISDN that is added on the end of the message in international format. The resulting message length is always the same length or shorter that that originally sent.

In an alternative embodiment, rather than sending the message to a specific service number or short code in order to cause the network to apply the desired transformation, the need for transformation could be signalled by a syntactic requirement in the body of the message. For example, starting a message with a '#' character could be used as the flag to indicate that the transformation is required. This has the benefit that the message may now be sent to the recipient's number instead of to a service number. In either case the handset's phone book facility may be used as normal to look up and use the appropriate destination number. This means that the destination number does not need to be entered into the message. However there are some disadvantages to this latter approach-
1. The network must examine the content of every message, instead of just those addressed to the service number, to determine whether the transformation is required.
2. If the requirement to add the true MSISDN of the sender on to the end of the message is retained, then the message length may grow beyond the maximum length for a single message, and need to be split into two messages.

A key aspect of any implementation of the invention is the capability of the apparatus to identify a message that arrives at the apparatus as a message intended by the sender to be transformed. A preferred embodiment achieves this by requiring that all messages to be transformed are sent for example to a particular service number or short code. An alternative embodiment uses an identifier in the body of the message, such as a prescribed arrangement of one or more characters. Other characteristics or combinations of characteristics of the message may be used.

A feature of the SMS router 2 is its ability to examine all aspects of a text message, including addresses, signalling fields, content and user settings. Using these capabilities, services may be defined which make use of, for example, content keywords, numeric addresses or alpha destination addresses as triggers to activate certain transformations and to pass on the transformed messages either directly to the destination or via an SMSC as appropriate to the application.

Referring to Figure 1, users are connected to a mobile telephone network (Network A) either directly ('on-net') or indirectly whilst roaming ('off-net') and are able to send mobile originated text messages via the MSC 1. The MSC I passes the message to the SMS Router 2 in Network A, which is able to examine message characteristics. Dependent upon characteristics of the message' the SMS router 2 is operable to identify and select certain messages. These selected messages may be transformed by a message transformation means 3, which may be either fully or partly internal or external to the SMS router 2. If the transformation means is external to the SMS router 2, it may involve interaction with one or more third party equipments. The apparatus is further operable to transmit the transformed message directly to the recipient via the MSC 4. An SMSC (not shown) may be used as a fallback in the event of failure to deliver directly as described above, or alternatively the SMS router 2 or the transformation means 3 may incorporate a retry capability, which may ease integration with billing systems.

A preferred embodiment allows the invention to be implemented in a first network, but to be usable by subscribers of any network. This may be achieved in the following ways:
1. The service number is defined as an international format number allowing it to be correctly interpreted by any network. According to Figure 1, if the sender subscribes to the same network as the network that operates the apparatus (Network A), this network is preferably arranged so that the apparatus intercepts the MO (mobile originated) message before it reaches the SMSC. This works even when Network A's subscriber is roaming.

According to Figure 2, if the sender subscribes to a different network (Network B) then the message will be sent to the subscriber's own SMSC 6 in Network B. This SMSC 6 will perform a 'send routing information for short message' (SRI-SM) query to the HLR 7 associated with the service number in Network A. Using a 'Virtual Mobile' known technique, the HLR 7 for the service number may be arranged to identify the apparatus embodying the invention as the destination address in the response to the query. One way to implement the Virtual Mobile technique is for the service number to be provisioned onto the HLR 7 of Network A in the normal way, and for the apparatus to do periodic 'location updates' to identify the apparatus as the current location of the virtual mobile telephone associated with the service number. An alternative way is for the HLR function associated with the service number to be located within the apparatus, and both of these techniques are known implementations of Virtual Mobile.

In this way, Network B's SMSC 6 is able to deliver all messages addressed to the service number to the apparatus in Network A, in mobile terminated (MT) format. The apparatus is arranged to be able to accept messages in either MO or MT format to deal with the two cases described above.

The service number may be any type of number, e.g. full MSISDN or short code. Messages in this case are arranged to arrive at the apparatus in Network A in the following ways: According to Figure 1, subscribers to Network A simply send messages to the service number in the normal way, as for case 1, and the network preferably arranges for these messages to be intercepted by an SMS Router before reaching the SMSC.

According to Figure 3, messages from subscribers of other networks reach the apparatus if those subscribers that wish to use the service change the stored Service Centre Number in their handset to the Service Centre Number of Network A. Such messages may be intercepted by the apparatus en route to an SMSC in network A and may be processed according to the present technique. Other messages from subscribers of Network B not intended for processing by the present technique that are passed on by the apparatus to the SMSC in Network A, may or may not be processed by the SMSC according to commercial arrangements between Networks A and B.

Billing issues may also be handled by the SMS Router 2 if not already handled by the MSC. The SMS Router 2 may generate billing records for post-pay customers, and may also interrogate and debit a prepayment system before allowing access for pre-pay customers. Known techniques may be used to ensure that in the event that the message is passed back to the SMSC, the customer is not billed twice.

The invention could be implemented on platforms other than SMS Routers, for example by an SMSC, noting that maximum advantage is gained by recognising messages while still in the MO domain, and before any storage by the network.

In so far as the embodiments of the invention described above may be implemented, at least in part, using software-controlled processing apparatus, it will be appreciated that a computer program providing such software control and a storage medium by which such a computer program is stored are envisaged as aspects of the invention.

## Claims

1. Telecommunications services apparatus for use with a telephone network supporting text messaging, each text message having a source address, the apparatus comprising means(2, 3) for identifying a text message by means of characteristics of the text message as belonging to a category of text messages, text messages belonging to said category of text messages comprising an alphanumeric source address within the body of the text message, and means for transforming characteristics of such an identified text message according to characteristics of said text message, said transformed text message having said alphanumeric source address removed from the body of the text message; and said source address replaced by said alphanumeric source address, and means for onward delivering the transformed text message in text message form to its destination together with said source address in alphanumeric m for display upon receipt, the source address having been derived on the basis of said alphanumeric source address as entered by the sender of the text message.

2. Apparatus according to claim 1 comprising means for performing the text message identification on the text message when in mobile originated form.

3. Apparatus according to claim 2, comprising an SMS routing means (2) for performing the text message identification.

4. Apparatus according to claim 3, wherein the SMS routing means is arranged to route the identified text messages to a subsystem (3) for said message transformation.

5. Apparatus according to claim 2, claim 3 or claim 4, wherein the transformed text message is delivered in mobile terminated form.

6. Apparatus according to any one of the preceding claims, wherein the characteristics of the text message to be identified are the message content.

7. Apparatus according to claim 6, comprising means for performing the text message identification on the body of the text message.

8. Apparatus according to claim 7, wherein an identified text message includes a syntax identifying a destination MSISDN number, said alphanumeric source address and the message to be displayed.

9. Apparatus according to claim 8, wherein a specific character is inserted as separator between distinct parts of the text message syntax.

10. Apparatus according to claim 9, wherein the specific character is a full stop.

11. Apparatus according to any one of claims 1 to 5, wherein the characteristics of the text message to be identified are message addressing.

12. Apparatus according to any one of claims 1 to 5, wherein the characteristics of the text message to be identified are user configurable settings.

13. Apparatus according to any one of the preceding claims, comprising means for performing the text message identification on the basis of the message being received at a dedicated service number.

14. Apparatus according to claim 13, wherein the dedicated service number is a shortcode number.

15. Apparatus according to any one of the preceding claims, including virtual mobile means for processing a message sent via another network, the virtual mobile means comprising a home location register (5; 7) operable to identify the telephone services apparatus as the destination address for the message from the other network.

16. Apparatus according to any one of claim 1 to 12, comprising means for performing the text message identification on the basis of a predetermined arrangement of one or more characters in the text message.

17. Apparatus according to claim 16, wherein the predetermined arrangement of one or more characters is at the start of the text message.

18. Apparatus according to any proceeding claim, wherein said transformed text message comprises said source address replaced by said alphanumeric source address appended at the end of the body of the text message.

19. A method of processing text messages, the method comprising identifying a text message by means of characteristics of the text message as belonging to a category of text messages, text messages belonging to said category of text messages comprising an alphanumeric source address within the body of the text message, transforming characteristics of such an identified text message according to characteristics of said text message, said transformed text message having said alphanumeric source address removed from the body of the text message and said source address replaced by said alphanumeric source address, and onward delivering the transformed text message in text message form to its destination together with said source address in alphanumeric form to be displayed upon receipt, the source address having been derived on the basis of said alphanumeric source address as entered by the sender of the text message.

20. A computer readable code for causing processing apparatus to perform the method steps according to claim 19.

21. A computer readable storage medium adapted to store a computer readable code according to claim 20.

## Patentansprüche

1. Telekommunikationsdiensteinrichtung zur Verwendung mit einem Telefonnetzwerk, das Textnachrichten unterstützt, wobei jede Textnachricht eine Quellenadresse aufweist, wobei die Einrichtung Mittel (2, 3) zum Identifizieren einer Textnachricht mit Hilfe von Eigenschaften der Textnachricht, wie der Zugehörigkeit zu einer Kategorie von Textnachrichten, aufweist, wobei Textnachrichten, die zu der Kategorie von Textnachrichten gehören, eine alphanumerische Quellenadresse in dem Körper der Textnachricht aufweisen und Mittel zum Umwandeln von Eigenschaften solcher identifizierter Textnachrichten gemäß Eigenschaften der Textnachricht, wobei für die umgewandelte Textnachricht die alphanumerische Quellenadresse aus dem Körper der Textnachricht entfernt wird und die Quellenadresse durch die alphanumerische Quellenadresse ersetzt wird, und Mittel zum Weitergeben der umgewandelten Textnachricht in Textnachrichtform an ihr Ziel zusammen mit der Quellenadresse in alphanumerischer Form zur Anzeige nach dem Empfang, wobei die Quellenadresse auf der Grundlage der alphanumerischen Quellenadresse, so wie sie durch den Absender der Textnachricht eingegeben wurde, abgeleitet wurde.

2. Einrichtung nach Anspruch 1 mit Mitteln zur Anwendung der Textnachrichtidentifizierung auf die Textnachricht, wenn diese in der von einem Mobiltelefon ausgehenden Form vorliegt.

3. Einrichtung nach Anspruch 2, mit einem SMS-Routingmittel zum Ausführen der Textnachrichtidentifizierung.

4. Einrichtung nach Anspruch 3, wobei das SMS-Routingmittel so eingerichtet ist, daß es die identifizierten Textnachrichten an ein Untersystem (3) für die Nachrichtenumwandlung routed.

5. Einrichtung nach Anspruch 2, 3 oder 4, wobei die umgewandelte Textnachricht in einer von einem Mobiltelefon empfangbaren Form bereitgestellt wird.

6. Einrichtung nach einem der vorhergehenden Ansprüche, wobei die Eigenschaften der zu identifizierenden Textnachricht der Nachrichteninhalt ist.

7. Einrichtung nach Anspruch 6, mit Mitteln zum Ausführen der Textnachrichtidentifizierung in dem Körper der Textnachricht.

8. Einrichtung nach Anspruch 7, wobei eine identifizierte Textnachricht eine Syntax umfaßt, die eine Ziel-MSISDN-Zahl, die alphanumerische Quellenadresse und die anzuzeigende Nachricht identifiziert.

9. Einrichtung nach Anspruch 8, wobei ein spezielles Zeichen als Trennzeichen zwischen bestimmten Teilen der Textnachrichtsyntax eingefügt ist.

10. Einrichtung nach Anspruch 9, wobei das spezielle Zeichen ein Punkt ist.

11. Einrichtung nach einem der Ansprüche 1 bis 5, wobei die Eigenschaften der zu identifizierenden Textnachricht die Nachrichtenadressierung ist.

12. Einrichtung nach einem der Ansprüche 1 bis 5, wobei die Eigenschaften der zu identifizierenden Textnachricht benutzerkonfigurierbare Einstellungen sind.

13. Einrichtung nach einem der vorhergehenden Ansprüche mit Mitteln zum Ausführen der Textnachrichtidentifikation auf der Basis der von einer dafür vorgesehenen Dienstnummer empfangenen Nachricht.

14. Einrichtung nach Anspruch 13, wobei die bestimmte Dienstnummer eine Kurzcodenummer ist.

15. Einrichtung nach einem der vorhergehenden Ansprüche einschließlich virtueller mobiler Mittel zum Verarbeiten einer über ein anderes Netzwerk gesendeten Nachricht, wobei die virtuellen mobilen Mittel ein Heimatortregister (5, 7) aufweisen, das so betreibbar ist, daß es die Telefondiensteinrichtung als die Zieladresse für die Nachricht aus dem anderen Netzwerk identifiziert.

16. Einrichtung nach einem der Ansprüche 1 bis 12 mit Mitteln zum Ausführen der Textnachrichtidentifizierung auf der Basis einer vorbestimmten Anordnung eines oder mehrerer Zeichen in der Textnachricht.

17. Einrichtung nach Anspruch 16, wobei die vorbestimmte Anordnung eines oder mehrerer Zeichen an dem Beginn der Textnachricht angeordnet ist.

18. Einrichtung nach einem der vorhergehenden Ansprüche, wobei die umgewandelte Textnachricht die durch die alphanumerische Quellenadresse ersetzte Quellenadresse an das Ende des Körpers der Textnachricht angehängt aufweist.

19. Verfahren zum Verarbeiten von Textnachrichten, wobei das Verfahren ein Identifizieren einer Textnachricht mit Hilfe von Eigenschaften der Textnachricht, wie der Zugehörigkeit zu einer Kategorie von Textnachrichten, aufweist, wobei Textnachrichten, die zu der Kategorie von Textnachrichten gehören, eine alphanumerische Quellenadresse in dem Körper der Textnachricht aufweisen, ein Übertragen von Eigenschaften solch einer identifizierten Textnachricht gemäß Eigenschaften der Textnachricht, wobei in der umgewandelten Textnachricht die alphanumerische Quellenadresse aus dem Körper der Textnachricht entfernt ist und die Quellenadresse durch die alphanumerische Quellenadresse ersetzt ist und nach Außen Bereitstellen der beim Empfang anzuzeigenden umgewandelten Textnachricht in Textnachrichtform an ihr Ziel, zusammen mit der Quellenadresse in alphanumerischer Form, wobei die Quellenadresse auf der Basis der alphanumerischen Quellenadresse abgeleitet wurde, so wie sie von dem Absender der Textnachricht eingegeben wurde.

20. Computerlesbarer Code zum Veranlassen einer Verarbeitungseinrichtung, die Verfahrensschritte nach Anspruch 19 auszuführen.

21. Computerlesbares Speichermedium, das dafür vorgesehen ist, einen computerlesbaren Code gemäß Anspruch 20 zu speichern.

## Revendications

1. Appareil de services de télécommunication, destiné à être utilisé avec un réseau téléphonique supportant la messagerie de texte, chaque message de texte possédant une adresse d'origine, l'appareil comprenant un moyen (2, 3) destiné à identifier un message de texte, à l'aide de caractéristiques du message de texte, comme appartenant à une catégorie de messages de texte, les messages de texte appartenant à ladite catégorie de messages de texte comprenant une adresse alphanumérique d'origine dans le corps du message de texte, un moyen destiné à transformer des caractéristiques d'un tel message de texte identifié en fonction de caractéristiques dudit message de texte, ladite adresse alphanumérique d'origine étant supprimée du corps du message de texte dans ledit message de texte transformé et ladite adresse d'origine étant remplacée par ladite adresse alphanumérique d'origine, et un moyen destiné à acheminer vers sa destination le message de texte transformé, sous la forme d'un message de texte, avec ladite adresse d'origine sous forme alphanumérique aux fins d'affichage à la réception, l'adresse d'origine ayant été dérivée sur la base de ladite adresse alphanumérique d'origine saisie par l'expéditeur du message de texte.

2. Appareil selon la revendication 1, comprenant un moyen destiné à effectuer l'identification du message de texte, sur le message de texte se trouvant dans sa forme de message provenant d'un mobile.

3. Appareil selon la revendication 2, comprenant un moyen de routage de SMS (2) afin d'effectuer l'identification du message de texte.

4. Appareil selon la revendication 3, dans lequel le moyen de routage de SMS est conçu pour router les messages de texte identifiés vers un sous-système (3) destiné à ladite transformation des messages.

5. Appareil selon la revendication 2, la revendication 3 ou la revendication 4, dans lequel le message de texte transformé est acheminé sous sa forme de message destiné à un mobile.

6. Appareil selon l'une quelconque des revendications précédentes, dans lequel les caractéristiques du message de texte à identifier sont le contenu du message.

7. Appareil selon la revendication 6, comprenant un moyen destiné à effectuer l'identification du message de texte sur le corps du message de texte.

8. Appareil selon la revendication 7, dans lequel un message de texte identifié comprend une syntaxe identifiant un numéro MS-ISDN de destination, ladite adresse alphanumérique de source et le message à afficher.

9. Appareil selon la revendication 8, dans lequel un caractère spécifique est inséré comme séparateur entre des parties distinctes de la syntaxe du message de texte.

10. Appareil selon la revendication 9, dans lequel le caractère spécifique est un point.

11. Appareil selon l'une quelconque des revendications 1 à 5, dans lequel les caractéristiques du message de texte à identifier sont l'adressage du message.

12. Appareil selon l'une quelconque des revendications 1 à 5, dans lequel les caractéristiques du message de texte à identifier sont des paramètres pouvant être configurés par l'utilisateur.

13. Appareil selon l'une quelconque des revendications précédentes, comprenant un moyen destiné à effectuer l'identification du message de texte sur la base de la réception du message à un numéro de service spécialisé.

14. Appareil selon la revendication 13, dans lequel le numéro de service spécialisé est un numéro abrégé.

15. Appareil selon l'une quelconque des revendications précédentes, comprenant un moyen mobile virtuel destiné à traiter un message envoyé via un autre réseau, le moyen mobile virtuel comprenant un registre de localisation de rattachement (5 ; 7), en mesure d'identifier l'appareil de services téléphoniques comme adresse de destination pour le message provenant de l'autre réseau.

16. Appareil selon l'une quelconque des revendications 1 à 12, comprenant un moyen destiné à effectuer l'identification du message de texte sur la base d'un agencement prédéterminé d'un ou plusieurs caractères dans le message de texte.

17. Appareil selon la revendication 16, dans lequel l'agencement prédéterminé d'un ou plusieurs caractères se trouve au début du message de texte.

18. Appareil selon l'une quelconque des revendications précédentes, dans lequel ledit message de texte transformé comprend ladite adresse d'origine remplacée par ladite adresse alphanumérique d'origine qui est ajoutée à la fin du corps du message de texte.

19. Procédé de traitement de messages de texte, le procédé comprenant l'identification d'un message de texte, à l'aide de caractéristiques du message de texte, comme appartenant à une catégorie de messages de texte, les messages de texte appartenant à ladite catégorie de messages de texte comprenant une adresse alphanumérique d'origine dans le corps du message de texte, la transformation des caractéristiques d'un tel message de texte identifié en fonction de caractéristiques dudit message de texte, ladite adresse alphanumérique d'origine étant supprimée du corps du message de texte dans ledit message de texte transformé et ladite adresse d'origine étant remplacée par ladite adresse alphanumérique d'origine, et l'acheminement vers sa destination du message de texte transformé, sous la forme d'un message de texte, avec ladite adresse d'origine sous forme alphanumérique aux fins d'affichage à la réception, l'adresse d'origine ayant été dérivée sur la base de ladite adresse alphanumérique d'origine saisie par l'expéditeur du message de texte.

20. Code lisible par ordinateur, destiné à commander à un appareil de traitement d'exécuter les étapes du procédé selon la revendication 19.

21. Support de stockage lisible par ordinateur, conçu pour stocker un code lisible par ordinateur selon la revendication 20.
